# EUROPEAN PATENT APPLICATION

(11) **EP 1 624 424 A1**
(43) Date of publication of application: **08.02.2006**
(21) Application number: 05016859.0
(22) Date of filing: 03.08.2005
(51) Int. Cl.: G07F 17/34

(54) **Gaming machine**

(30) Priority: 04.08.2004 JP 2004228457
(71) Applicant: Aruze Corporation, Tokyo 135-0063 (JP)
(72) Inventor: Sato, Kazunobu, Tokyo 135-0063 (JP); Yoshida, Masahiro, Tokyo 135-0063 (JP)
(74) Representative: HOFFMANN EITLE

(57) **Abstract**

A gaming machine includes display form determining means for determining a display form of a special symbol, which is a symbol advantageous for payout and is to be stopped in at least one of display areas, in a bonus game when shift determining means determines that the game mode shifts from a base game to a bonus game. The gaming machine further includes display control means for controlling display means in the bonus game to display the special symbol in the display form determined by the display form determining means.

## Description

### BACKGROUND OF THE INVENTION

### 1. Field of the Invention

The present invention relates to a gaming machine such as a slot machine in which symbols in multiple columns are variably displayed.

### 2. Description of the Related Art

A slot machine is known as a gaming machine which pays out a medium such as a medal and a coin used in a game (where a coin is used as the medium, for example, hereinafter) in accordance with a winning combination in the game. A slot machine may have mechanical reels having symbols on the outer circumferential surfaces or may display video reels, that is, image reels, virtually on a display.

In a slot machine having image reels, reels on the display start scrolling in response to a predetermined operation by a player, and symbols aligned in a predetermined order are displayed rotationally. When all reels stop, a coin or coins is or are paid out in accordance with a winning combination of symbols on an activated pay line at that time. The slot machine is disclosed in JP-A-2004-57221, for example.

In the slot machine disclosed in the publication, a bonus game is prepared in which a predetermined number of free games can be played in addition to a base game. Upon a shift of a game mode of the machine from the base game to the bonus game, a determining game is played for determining the number of free games and a payout rate for a free game before the first free game starts. For the determining game, a rotating wheel is used which has multiple "number"/"rate" areas in no particular order. The number of free games and payout rate depend on the indication of the rotating wheel when the rotating wheel stops.

In this way, determining the number of free games and payout rate in accordance with the result of the determining game can prevent the bonus game from being monotonous, which is repeated with a certain degree of frequency;.

### SUMMARY OF THE INVENTION

However, a player may gradually feel the bonus game monotonous and be no longer amused by the bonus game even with the slot machine as disclosed in the above publication. Then, a player who wants more excitement may not be satisfied with the gaming machine and may demand the appearance of a more inventive gaming machine.

It is an object of the invention to solve the problem and to provide a more amusing gaming machine.

A gaming machine of the present invention includes: display means having a plurality of display areas in each of which a plurality of symbols are variably displayed; symbol determining means for determining symbols to be stopped in each of the display areas of the display means; and shift determining means for determining whether a game mode shifts from a base game to a bonus game based on the symbols determined by the symbol determining means. The gaming machine is characterized in that the gaming machine further comprises: display form determining means for determining a display form of a special symbol, which is a symbol advantageous for payout and is to be stopped in at least one of the display areas, in the bonus game when the shift determining means determines that the game mode shifts from the base game to the bonus game; and display control means for controlling the display means in the bonus game to display the special symbol in the display form determined by the display form determining means.

In the above gaming machine, whether a game mode shifts from a base game to a bonus game is determined by the shift determining means based on symbols determined by the symbol determining means. When the shift determining means determines that the game mode shifts from the base game to the bonus game, the display form determining means determines a display form of a special symbol, which is a symbol advantageous for payout, in the bonus game. The display control means controls the display means in the bonus game to display the special symbol in the display form determined by the display form determining means. Thus, the display form of the special symbol, which involves the expectation of a player for obtaining coins, is determined every shift to the bonus game, whereby varied. Here, a player cannot predict the display form of the special symbol and can thus continuously enjoy playing a game without feeling monotonousness.

### BRIEF DESCRIPTION OF THE DRAWINGS

Other and further objects, features, and advantages of the invention will appear more fully from the following description taken in connection with the accompanying drawings in which:
Fig. 1 is a perspective view showing an appearance of a slot machine according to an embodiment of the invention.
Fig. 2 is a diagram showing a button layout on a control panel of the slot machine in Fig. 1.
Fig. 3 is a block diagram of the slot machine in Fig. 1.
Fig. 4 is a block diagram showing an example of the image control circuit in Fig. 3.
Fig. 5 is a diagram showing a display screen of the main display of the slot machine.
Fig. 6 is a diagram showing an arrangement table for display areas of the slot machine.
Fig. 7A is a flowchart showing a main processing in a game proceeding of the slot machine.
Fig. 7B is a flowchart showing a lottery processing in the flowchart of Fig. 7A.
Fig. 8 is a diagram showing a random number category table, which is referred for the determination of a display form of a joker symbol.
Fig. 9 is a diagram showing an example of the display screen of the main display in a bonus game.

### DESCRIPTION OF THE PREFERRED EMBODIMENTS

A gaming machine according to the invention will be described in detail based on an embodiment embodying the invention as a slot machine and with reference to drawings.

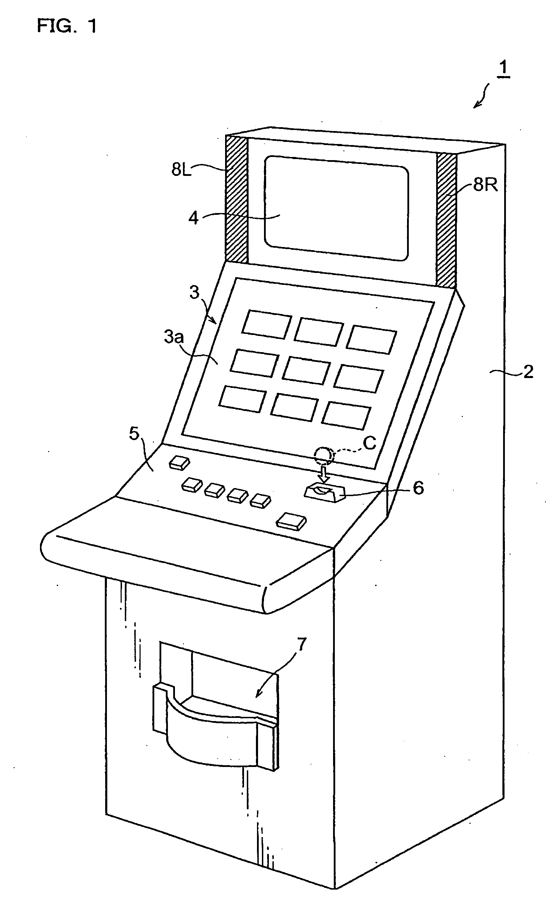

As shown Fig. 1, a slot machine 1 of the embodiment has a cabinet 2 including a main display 3 for digitally displaying a slot game. The main display 3 is a display device having a transmissive touch panel 3a. The slot machine 1 receives an input command in response to contact on the touch panel 3a by a player.

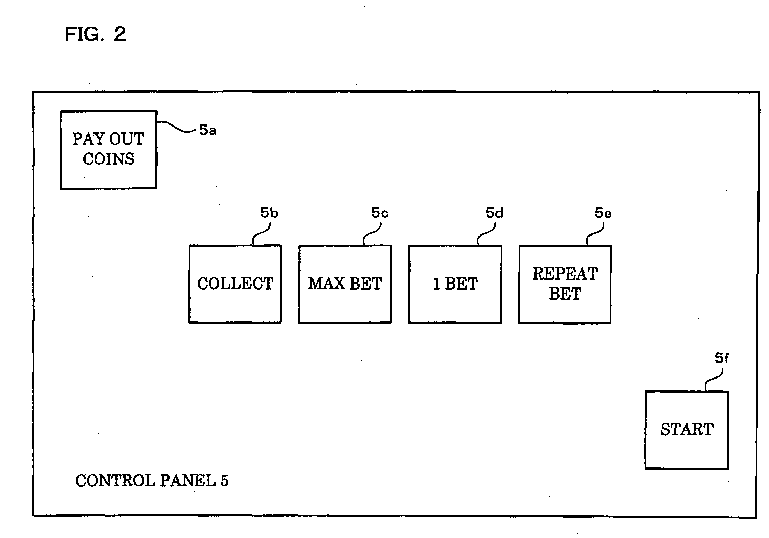

A sub display 4, which displays an image for explaining details of a game, for example, is provided above the main display 3. A control panel 5, which is substantially similar to one in a publicly known slot machine and includes six buttons 5a to 5f as shown in Fig. 2, is provided below the main display 3.

More specifically, as shown in Fig.2, a PAY OUT COINS button 5a is provided at the upper left of the control panel 5 for commanding to pay out a coin or coins obtained in a game. A START button 5f is provided at the lower right of the control panel 5 for commanding to start a game. The other four buttons are aligned horizontally at the substantial center of the control panel 5 and are a COLLECT button 5b, a MAX BET button 5c, a 1 BET button 5d and a REPEAT BET button 5e in order from the left.

The COLLECT button 5b is a button for use in a gamble game which can be challenged only when a coin or coins is or are obtained, e.g., a game by which the number of coins to be obtained can be doubled, and for collecting coins obtained in the gamble game. The MAX BET button 5c, 1 BET button 5d and REPEAT BET button 5e are buttons each for determining the number of coins to be bet. More specifically, the maximum number of coins is bet with the MAX BET button 5c. One coin is bet with the 1 BET button 5d. The same number of coins as that of the last game is bet with the REPEAT BET button 5e.

Referring back to Fig. 1, a coin insertion slot 6, into which coins are inserted, is provided below the main display 3. In addition to the coin insertion slot 6, a bill insertion slot may be provided whereby a bill or bills can be used as a medium in a slot game. A coin tray 7 is provided below the cabinet 2 whereby a player can receive a paid out coin or coins. A pair of speakers 8L and 8R is further provided on the left and right of the sub display 4.

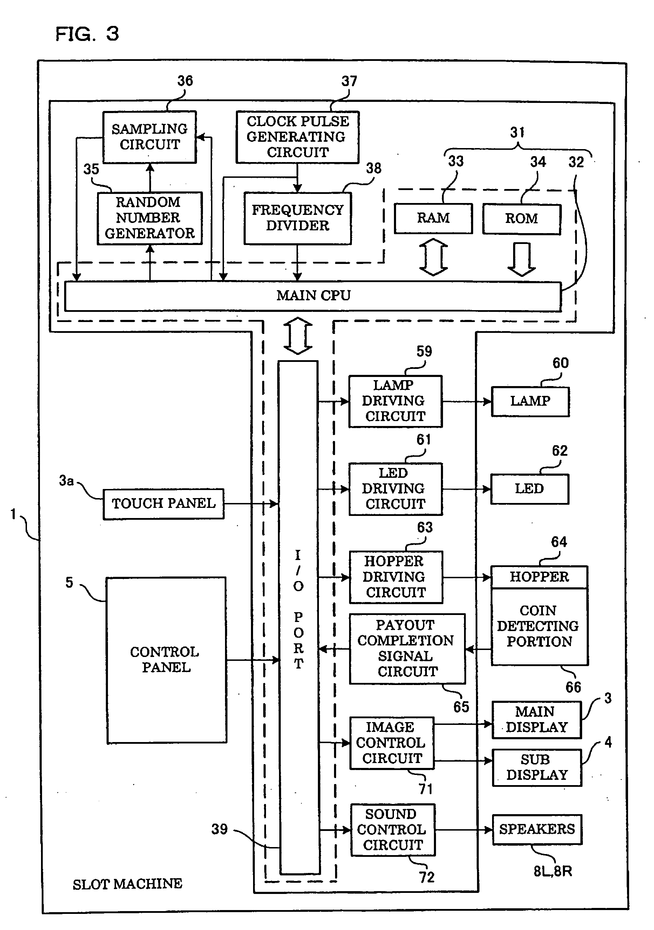

As shown in Fig. 3, the slot machine 1 includes multiple components centering around a microcomputer 31.

The microcomputer 31 includes a main CPU (Central Processing Unit) 32, a RAM (Random Access Memory) 33 and a ROM (Read Only Memory) 34.

The main CPU 32 operates in accordance with a program stored in the ROM 34 and receives signals from the touch panel 3a on the main display 3 and each of the buttons 5a to 5f on the control panel 5 through an I/O port 39, inputs/outputs signals to/from other components, and controls an operation of the entire slot machine 1. The RAM 33 stores data and/or programs to be used when the main CPU 32 operates and, for example, may temporarily hold a random number sampled by a sampling circuit 36, which will be described later, after a game is started. The ROM 34 stores programs executable by the main CPU 32 and permanent data.

The slot machine 1 has a random number generator 35, the sampling circuit 36, a clock pulse generating circuit 37, and a frequency divider 38. The random number generator 35 operates in accordance with a command from the main CPU 32 and generates random numbers within a predetermined range. In accordance with a command from the main CPU 32, the sampling circuit 36 extracts an arbitrary random number from random numbers generated by the random number generator 35 and inputs the extracted random number to the main CPU 32. The clock pulse generating circuit 37 generates a reference clock for operating the main CPU 32. The frequency divider 38 inputs the main CPU 32 a signal resulting from the division of the reference clock by a predetermined period.

The slot machine 1 includes a lamp drive circuit 59, a lamp 60, an LED drive circuit 61, an LED 62, a hopper drive circuit 63, a hopper 64, a payout completion signal circuit 65, and a coin sensor 66. The slot machine 1 further includes an image control circuit 71 and a sound control circuit 72. The image control circuit 71 controls images to be displayed on the main display 3 and sub display 4. The sound control circuit 72 controls sound to be generated from the speakers 8L and 8R.

The lamp drive circuit 59 outputs a signal for turning on to the lamp 60 so as to flash the lamp 60 during a game, which produces a game effect. The LED drive circuit 61 controls flashing on the LED 62. The LED 62 is used for indicating a credit value and the number of obtained coins. The hopper drive circuit 63 drives the hopper 64 under the control of the main CPU 32. The hopper 64 pays out a coin or coins through the coin tray 7.

The coin sensor 66 counts the number of coins paid out by the hopper 64 and inputs data on the counted number of coins to the payout completion signal circuit 65. The payout completion signal circuit 65 inputs the main CPU 32 a signal for informing the completion of payout of coins when the number of coins, data on which is inputted from the coin sensor 66, reaches a predetermined number.

The image control circuit 71 controls the main display 3 and sub display 4 so as to display images including a symbol image.

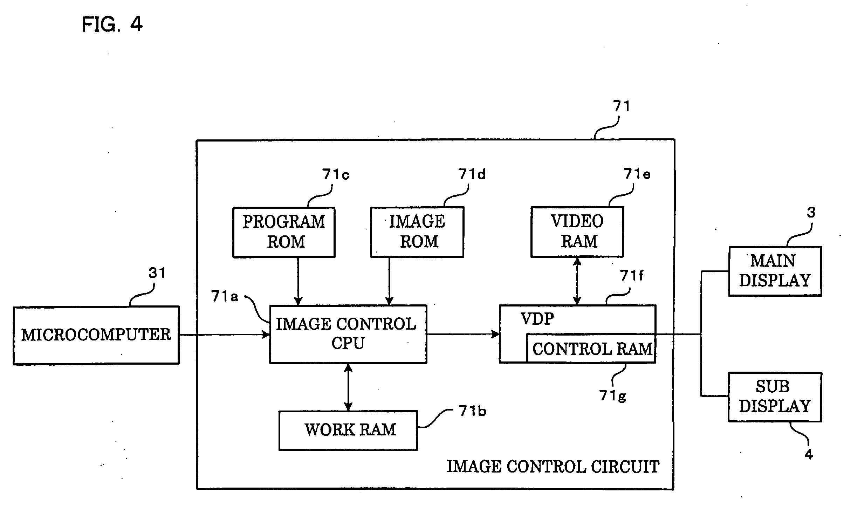

The image control circuit 71 includes, as shown in Fig. 4, an image control CPU 71a, a work RAM 71b, a program ROM 71c, an image ROM 71d, a video RAM 71e, and a VDP (Video Display Processor) 71f. The image control CPU 71a determines images including a symbol image to be displayed on the main display 3 and sub display 4 based on a parameter defined by the microcomputer 31 and in accordance with an image control program pre-stored in the program ROM 71c. The work RAM 71b functions as a temporary storage unit to be used when the image control CPU 71a executes the image control program.

The program ROM 71c may store the image control program and a select table, for example. The image ROM 71d stores dot data to be used for forming an image. The dot data includes symbol image data in this embodiment. The video RAM 71e functions as a temporary storage unit to be used when the VDP 71f forms an image. The VDP 71f having a control RAM 71g forms images, which are determined by the image control CPU 71a to be displayed on the main display 3 and sub display 4, and outputs the formed images to the main display 3 and sub display 4.

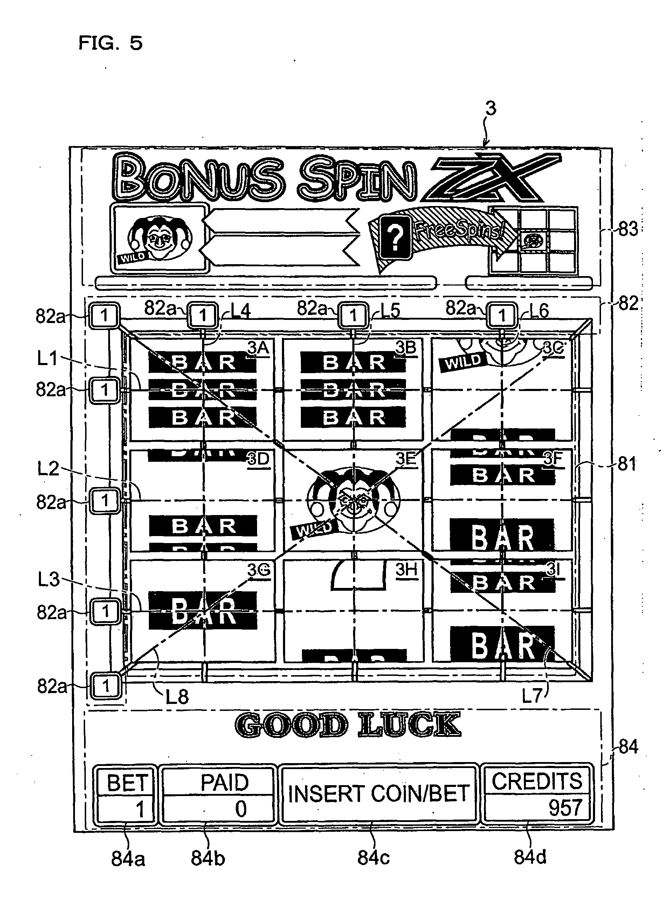

As shown in Fig. 5, the main display 3 in this embodiment includes a symbol display area group 81, a BET value display area 82, an upper display area 83, and a lower display area 84.

The symbol display area group 81 includes display areas 3A to 3I for displaying symbols in a 3 by 3 matrix. The display areas 3A to 3I variably and rotationally display reel images having multiple kinds of symbols. After the rotational display for a predetermined period of time, selected symbols undergo image processing to be-stopped at the substantial center of the display areas 3A to 3I, respectively.

The BET value display area 82, which is provided in the left and upper of the symbol display area group 81, includes BET value indicators 82a each for indicating the number of coins bet for a corresponding pay line. The slot machine 1 has eight pay lines including L1, L2 and L3 horizontally, L4, L5 and L6 vertically and L7 and L8 diagonally. When a predetermined winning combination of symbols is made on an activated pay line selected from the eight pay lines L1 to L8, i.e., on a pay line for which one or more coins are bet, a payout in accordance with the winning combination is awarded to a player.

The upper display area 83, which is provided above the symbol display area group 81 and BET value display area 82, includes a name and/or logo mark of the slot machine 1, a mark illustrating how to play the game, and the like. The lower display area 84, which is provided below the symbol display area group 81, includes a total BET value indicator 84a, a number-of-payout-coins indicator 84b, a text display area 84c, and a credit value indicator 84d.

The total BET value indicator 84a indicates the number of coins bet for one game. The number-of-payout-coins indicator 84b indicates the number of coins obtained in one game. The text display area 84c displays text information on the current state of a game, for example, for informing a shift of a game mode of the machine from the base game to the bonus game. The credit value indicator 84d indicates the current number of credits.

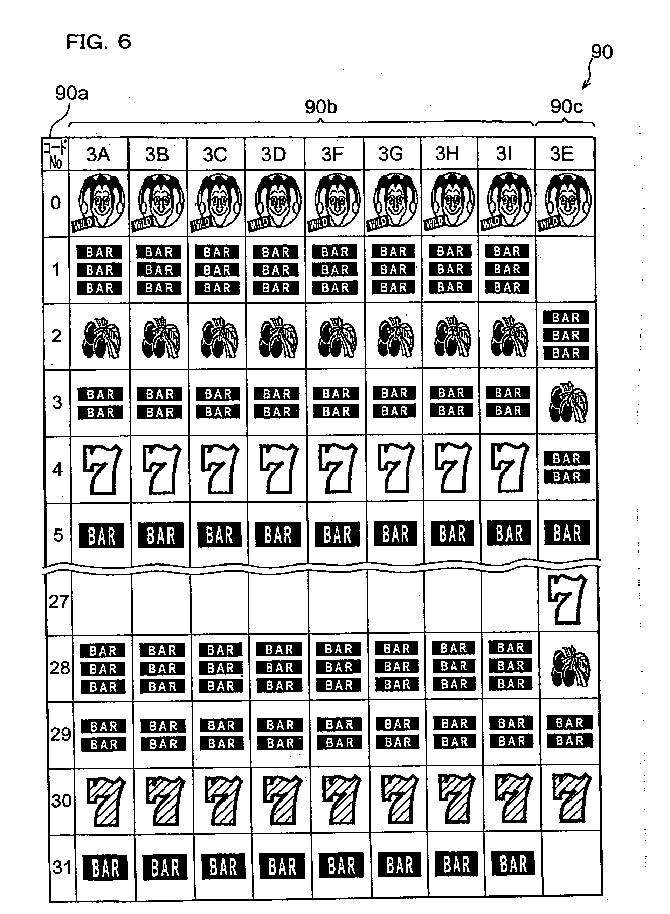

The symbols and their arrangements to be displayed in each of the display areas 3A to 3I of the symbol display area group 81 are as shown in the arrangement table in Fig. 6. Thirty two symbols aligned in predetermined orders are rotationally scrolled in each of the display areas 3A to 3I, and a player can perceive as if mechanical reels are rotating and symbols are varying. The symbol arrangement in the display area 3E (which is located at the center of the symbol display area group 81 and called a center reel herein after) is different from those in the other display areas 3A, 3B, 3C, 3D, 3F, 3G, 3H and 3I (which are called peripheral reels hereinafter).

On the arrangement table in Fig. 6, a joker symbol (special symbol) T1 positioned under Code No. 0 is a so-called almighty symbol that is handled as any other symbol. When the joker symbol T1 stops in any one of the display areas 3A to 3I, a winning combination of symbols can be easily made on the pay lines L1 to L8. In other words, the joker symbol T1 is a symbol advantageous for payout.

In the slot machine 1, a base game and a bonus game are prepared in a game proceeding. The main CPU 32 of the microcomputer 31 determines whether the game mode shifts from the base game to the bonus game or not. If the main CPU 32 determines that the game mode shifts from the base game to the bonus game, a predetermined number of (such as 10) free games are performed as a bonus game. Notably, the number of free games can be increased or decreased as required. In this embodiment, when the joker symbol T1 stops at the center reel 3E (see Fig. 5), the main CPU 32 determines that the game mode shifts from the base game to the bonus game.

In the bonus game, a player can play a game without inserting any coin or pressing any of the BET buttons 5c to 5e. In other words, during the bonus game, a player can receive a coin or coins paid out without consuming coins or credits, which is greatly advantageous for obtaining coins. Thus, a player can perform the base game with expectation for shifting the game mode to the bonus game.

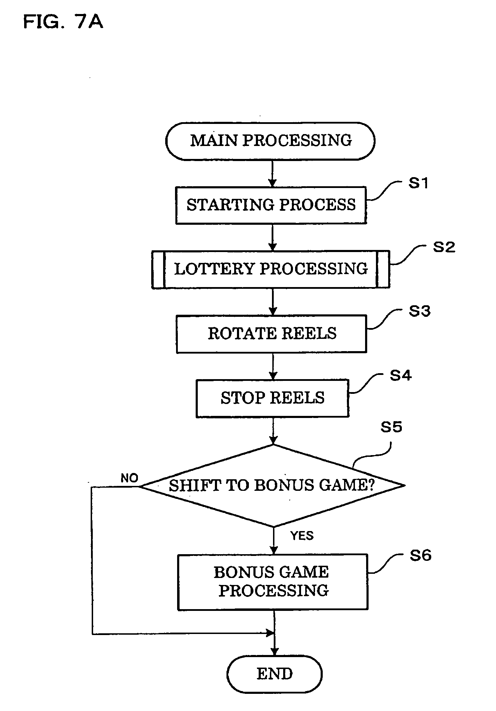

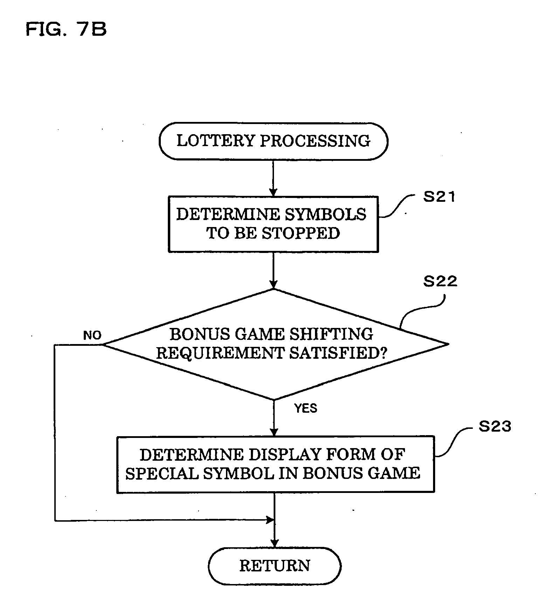

Next, with reference to Figs. 7A and 7B, a main processing in a game proceeding of the slot machine 1 according to this embodiment will be described. Step is abbreviated to S in Figs. 7A and 7B. The following processings are implemented by the main CPU 32 with reference to the programs stored in the ROM 34 and RAM 33. When the slot machine 1 is started, a base game is ready to play as a slot game.

In the slot machine 1, when the main processing is started, starting process of a game is performed in STEP 1 under the control of the main CPU 32. More specifically, the main CPU 32 accesses the ROM 34 and transfers data of a basic screen such as a frame, which is to be displayed on the main display 3, to the image control circuit 71. The image control circuit 71 once stores the received data in the video RAM 71e and causes the main display 3 to display it. Thus, the slot machine 1 is now ready for a player to play a slot game.

In STEP 1, player's BET is waited, and, in response to the insertion of coins bet for one game through the coin insertion slot 6 or the press on the BET buttons 5c to 5e when any credits remain, the game is started. Then, the starting process exits.

After exit from the starting process in STEP 1, the main CPU 32 performs lottery processing in STEP 2. In the lottery processing, as shown in Fig. 7B, the main CPU 32 first determines symbols to be stopped in the display areas 3A to 3I on the main display 3 (STEP 21), and thus functions as the symbol determining means. The main CPU 32 uses a random number transmitted thereto from the sampling circuit 36 in determining symbols. Then, the main CPU 32 further determines whether a bonus game shifting requirement is satisfied or not based on the symbols determined in STEP 21 (STEP 22) , and thus the main CPU 32 functions as the shift determining means. The main CPU 32 determines that the shifting requirement is satisfied when the joker symbol T1 is selected by lottery as a symbol to be stopped at the center reel 3E, in this embodiment.

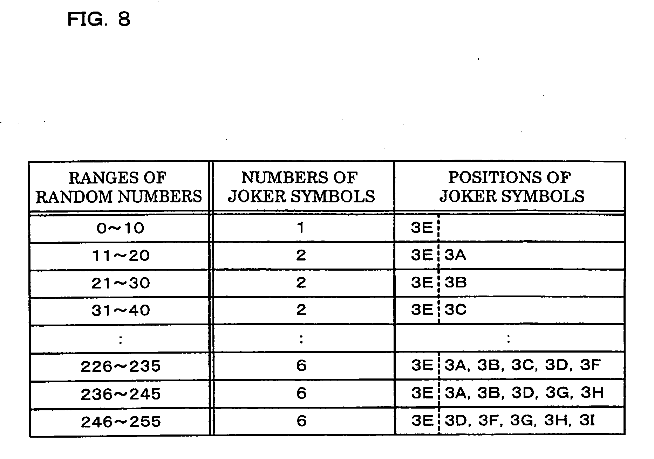

If the main CPU 32 determines that the bonus game shifting requirement is satisfied (STEP 22: YES), the main CPU 32 subsequently determines a display form of the joker symbol T1 in the bonus game (STEP 23). Here, the main CPU 32 functions as the display form determining means. More specifically, the main CPU 32 determines the number of joker symbols T1 to be fixedly displayed during a bonus game, i. e. , every free game in a bonus game, and one or more display areas 3A to 31 in which the joker symbol or symbols T1 is or are to be fixedly displayed, with reference to the random number transmitted thereto from the sampling circuit 36 and a random number category table as shown in Fig.. 8, which is stored in the ROM 34. For example, according to the random number category table shown in Fig. 8, when a random number, 35, is transmitted to the main CPU 32, the main CPU 32 determines that the number of joker symbols T1 to be fixedly displayed during a bonus game is two and display areas in which the joker symbols T1 are to be fixedly displayed are the center reel 3E and peripheral reel 3C. After the process of STEP 23, the lottery processing ends and the processing moves to STEP 3 in Fig. 7A.

If the main CPU 32 determines that the bonus game shifting requirement is not satisfied (STEP 22: NO), the processing moves to STEP 3 in Fig. 7A without performing STEP 23.

In STEP 3, the main CPU 32 controls the image control circuit 71 to perform image processing for virtually realizing the state that mechanical reels are rotating with symbols scrolled in the display areas 3A to 3I on the main display 3. Here, the game mode is still in the base game.

In STEP 4 following STEP 3, the main CPU 32 controls the image control circuit 71 to stop reels and thereby to stop symbols determined in STEP 21 in the display areas 3A to 3I on the main display 3.

Here, if the joker symbol T1 is stopped at the center reel 3E, the main CPU 32 determines the shift to the bonus game (STEP 5: YES), the processing moves to STEP 6. If not (STEP 5: NO), the main processing exits. The determination in STEP 5 is related to that in STEP 22 shown in Fig. 7B.

In STEP 6, the main CPU 32 shifts the game mode from the base game to the bonus game and performs a bonus game processing. In the bonus game processing, 10 free games may be performed, which are different from the base game in that a player does not have to insert any coin or press any of the BET buttons 5c to 5e.

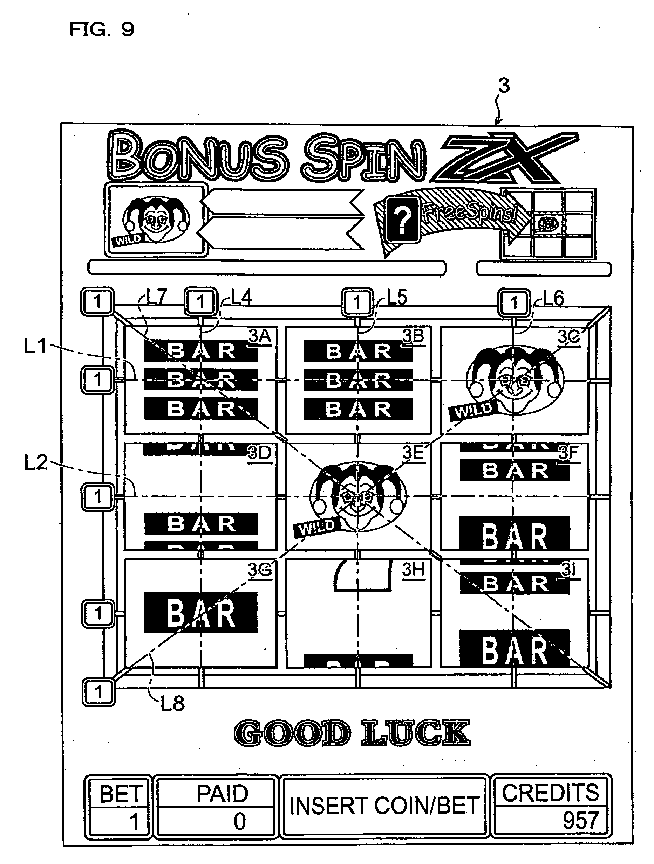

In the bonus game, the image control CPU 71a controls the main display 3, based on the display form of the joker symbols T1 determined by the main CPU 32 in STEP 23 (see Fig. 7B) , to display the joker symbols T1. Thus, the image control CPU 71a functions as the display control means. For example, as described above, when a random number, 35, is transmitted to the main CPU 32 in STEP 23, the image control CPU 71a controls the main display 3 to fixedly display the joker symbols T1 at the center reel 3E and peripheral reel 3C (see Fig. 9). The joker symbols T1 are fixedly displayed at the center reel 3E and peripheral reel 3C during a bonus game, i.e., every free game in a bonus game.

As described above, a display form of the special symbol (in the above embodiment, the number of joker symbols T1 to be fixedly displayed and one or more display areas in which the joker symbol or symbols is or are to be fixedly displayed) , which involves the expectation of a player for obtaining coins, is determined every shift to the bonus game, whereby varied. Here, a player cannot predict the display form of the special symbol and can thus continuously enjoy playing a game without feeling monotonousness.

In this embodiment, the display form of the joker symbol T1 includes the number of joker symbols T1. More specifically, the main CPU 32 determines the number of joker symbols T1 to be displayed during a bonus game in STEP 23, and, in the bonus game, the image control CPU 71a controls the main display 3 to display the joker symbols T1 the number of which is determined in STEP 23. The expectation of a player for obtaining coins, which depends on the number of joker symbols T1 to be stopped in the display areas, is effectively varied, whereby the advantages described above is surely achieved.

Further in this embodiment, the display form of the joker symbol T1 includes the display area in which the joker symbol T1 is to be displayed. More specifically, the main CPU 32 determines one or more display areas in which the joker symbol or symbols T1 is or are to be displayed in STEP 23, and, in the bonus game, the image control CPU 71a controls the main display 3 to display the joker symbol T1 in the display area or areas determined in STEP 23. The expectation of a player for obtaining coins, which further depends on display areas in which the joker symbols T1 are to be displayed, is effectively varied, whereby the advantages described above is surely achieved.

Moreover, the main CPU 32 determines, in STEP 23, that the joker symbols T1 are to be fixedly displayed during a bonus game, and the image control CPU 71a controls the main display 3 to fixedly display the joker symbols T1 in the bonus processing. Here, pay lines (pay lines L1, L2, L5, L6, L7 and L8 in the above example) having the two joker symbols T1 fixedly displayed thereon may easily make a winning combination of symbols. In this case, a player can have higher expectation for obtaining many coins than that in the case where a bonus game is played without the joker symbols T1 fixedly displayed. As a result, a player can continuously enjoy playing free games with more amusement.

The invention is not limited to the embodiment above, but various changes or modifications may be made thereto.

The display form of the joker symbol T1 may be determined through any means other than the random number.

The timing for determining the display from of the joker symbol T1 by the main CPU 32 does not have to be always STEP 2 but may be any timing in the period from the determination of the shift to the bonus game to the start of the bonus game, for example, in determining symbols to be stopped in each free game.

On the random number category table shown in Fig. 8, the "number of joker symbols T1" to be displayed during a bonus game and the "position of joker symbols T1 (i.e., display areas in which the joker symbols T1 are displayed)" may be changed, while according to the table in Fig. 8 the joker symbol T1 is always to be displayed at the center reel 3E during a bonus game. For example, when the "number of joker symbols T1" on the random number category table is "9", the joker symbols T1 are displayed in all of the display areas 3A to 31, which effectively produces an effect for strongly impacting a player and can greatly increase the expectation of the player for obtaining coins.

The main CPU 32 may determine only either one of the number of joker symbols T1 to be displayed during a bonus game and display areas in which the joker symbols T1 are to be displayed in STEP 23. For example, the main CPU 32 may determine the number of joker symbols T1 to be displayed during a bonus game or display areas in which the joker symbols T1 are to be displayed with reference to a random number category table which is similar to the random number category table shown in Fig. 8. In the case where the main CPU 32 determines only the number of joker symbols T1 in STEP 23, display areas in which the joker symbols T1 are to be displayed may be determined simultaneously with the determination of symbols to be stopped in each free game. On the other hand, in the case where the main CPU 32 determines only display areas in which the joker symbols T1 are displayed in STEP 23, the number of joker symbols T1 to be displayed may be determined simultaneously with the determination of symbols to be stopped in each free game. More specifically, priorities may be assigned to the display areas 3A to 3I, and, when the number of joker symbols T1 to be displayed is determined, the joker symbol T1 may be assigned to the display areas in the priority order.

As described above, in the case where the main CPU 32 determines only either one of the number of joker symbols T1 to be displayed and display areas in which the joker symbols T1 are to be displayed in STEP 23, the number and positions of the joker symbols T1 to be fixedly displayed vary every free game, which can offer a wide range of variation to the bonus game.

Although the joker symbol T1 is applied to the special symbol in the above embodiment, a scatter symbol, a symbol which brings payout even with the symbol appearing on a pay line once (cherry symbol in general), or the like may be applied to the special symbol as long as the special symbol is a symbol advantageous for payout. In the case where the scatter symbol serves as the special symbol, the number of scatter symbols stopped in the display areas 3A to 3I may easily exceed the number required for payout, which is more advantageous for payout.

The bonus game shifting requirement is not limited to the stop of the joker symbol T1 at the center reel 3E but may be changed in any manner to publicly known various bonus game shifting requirements such as a predetermined symbol arrangement made on a predetermined pay line. In the case where a scatter symbol is applied to the special symbol, the bonus game shifting requirement may be satisfied when a predetermined number of (four or more, for example) scatter symbols is to be displayed in the display areas 3A to 3I. Here, the arrangement and positions of the scatter symbols may be varied.

Although the slot machine 1 having nine display areas 3A to 3I is adopted in the above embodiment, the slot machine may be a so-called 3-reel slot machine or 5-reel slot machine having three or five display areas.

While the above embodiment illustrates the example that the invention is applied to a so-called simulated reel slot machine, the invention may be applied to a mechanical reel slot machine.

Furthermore, the invention is applicable to gaming machines other than slot machines.

While this invention has been described in conjunction with the specific embodiments outlined above, it is evident that many alternatives, modifications and variations will be apparent to those skilled in the art. Accordingly, the preferred embodiments of the invention as set forth above are intended to be illustrative, not limiting. Various changes may be made without departing from the spirit and scope of the invention as defined in the following claims.

## Claims

1. A gaming machine comprising: display means having a plurality of display areas in each of which a plurality of symbols are variably displayed; symbol determining means for determining symbols to be stopped in each of the display areas of the display means; and shift determining means for determining whether a game mode shifts from a base game to a bonus game based on the symbols determined by the symbol determining means,
**characterized in that** the gaming machine further comprises:
display form determining means for determining a display form of a special symbol, which is a symbol advantageous for payout and is to be stopped in at least one of the display areas, in the bonus game when the shift determining means determines that the game mode shifts from the base game to the bonus game; and
display control means for controlling the display means in the bonus game to display the special symbol in the display form determined by the display form determining means.

2. The gaming machine according to Claim 1, **characterized in that**:
the display form determining means determines the number of special symbols; and
the display control means controls the display means to display, in the display area or areas, the special symbol or symbols the number of which is determined by the display form determining means.

3. The gaming machine according to Claim 1 or 2, **characterized in that**:
the display form determining means determines one or more display areas in which the special symbol or symbols is or are to be stopped from the plurality of display areas; and
the display control means controls the display means to display the special symbol or symbols in the display area or areas determined by the display form determining means.

4. The gaming machine according to Claim 1 or 2, **characterized in that**:
the display form determining means determines that one or more special symbols are to be fixedly displayed during the bonus game; and
the display control means controls the display means to fixedly display the special symbols.
